# EUROPEAN PATENT APPLICATION

(11) **EP 4 571 140 A1**
(43) Date of publication of application: **18.06.2025**
(21) Application number: 23216870.8
(22) Date of filing: 14.12.2023
(51) Int. Cl.: F16D 55/225, F16D 65/095, F16D 65/097, F16D 65/18

(54) **A WHEEL BRAKE ARRANGEMENT**

(71) Applicant: VOLVO TRUCK CORPORATION, 405 08 Göteborg (SE)
(72) Inventor: VELMURUGAN, Arunkumar, 560093 KARNATAKA (IN); CHATTERJEE, Anupam, 560066 KARNATAKA (IN); MULANI, Sameer, 415523 SATARA (IN); KADAM, Rohit, 431605 MAHARASHTRA (IN); LOHAR, Rakesh, 455001 BANGALORE (IN); PATNAIK, Aishwarya, 751003 ODESHA (IN)
(74) Representative: Kransell & Wennborg KB

(57) **Abstract**

The present disclosure relates to a wheel brake arrangement. The wheel brake arrangement comprises a brake pad arrangement, a spreader plate and an engagement interface section. The engagement interface section comprises a first interface surface forming part of the brake pad arrangement, and a second interface surface forming part of the spreader plate, the first and second interface surfaces being arranged in abutment with each other in at least an axial direction of the wheel brake arrangement during a brake release mode of the wheel brake arrangement to prevent axial displacement between the brake pad arrangement and the spreader plate.

## Description

### TECHNICAL FIELD

The disclosure relates generally to wheel brakes. In particular aspects, the disclosure relates to wheel brake arrangement which may advantageously reduce drag losses during operation. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Vehicles, such as e.g. vehicles in the form trucks, always have a high demand on the wheel brakes. These demands relate in particular to the braking capability of the wheel brake as they need to function properly in order to reduce vehicle speed properly.

Typically, the wheel brake comprises a brake disc connected to a wheel hub, which in turn is connected to a wheel of the vehicle. The wheel brake further comprises brake pads which are arranged to provide a brake action against the brake disc, i.e. clamp against the brake disc, such that a rotation speed of the wheel is reduced. The brake disc will thus slip against the brake pads until the wheel has stopped its motion. This creates frictional heat in the brake disc which needs to be taken care of. The brake pads are in turn connected to a carrier arranged to support the brake pad and keep it in its correct position.

However, there is a risk that the brake pads are not sufficiently removed from the brake disc after a braking event, which may cause drag losses increasing the fuel consumption, and increased wear of the brake pads. There is thus a desire to improve the brake disc arrangement for e.g. increasing the operational lifetime of its components as well as reducing the fuel consumption generated by the drag losses.

### SUMMARY

According to a first aspect of the disclosure, there is provided a wheel brake arrangement for a vehicle, the wheel brake arrangement comprising a brake pad arrangement comprising a first surface configured to suspend a brake pad arranged to engage with a brake disc during a brake mode of the wheel brake arrangement, and a second surface arranged on an axially opposite side of the brake pad arrangement relative to the first surface, a spreader plate comprising a first spreader plate surface facing the second surface of the brake pad arrangement, and an engagement interface section forming part of the brake pad arrangement and the spreader plate, the engagement interface section extends from an upper peripheral end towards a lower peripheral end for each of the second surface and the first spreader plate surface, wherein the engagement interface section comprises a first interface surface forming part of the brake pad arrangement, and a second interface surface forming part of the spreader plate, the first and second interface surfaces being arranged in abutment with each other in at least an axial direction of the wheel brake arrangement during a brake release mode of the wheel brake arrangement to prevent axial displacement between the brake pad arrangement and the spreader plate.

The first aspect of the disclosure may seek to solve the problem of residual drag that may occur after a braking event, i.e. after the brake pad arrangement is removed from the brake disc. The first aspect of the disclosure efficiently forces the brake pad arrangement away from the brake disc when the brake is released. In particular, the engagement interface section will cause the spreader plate and the brake pad arrangement to move away from the brake disc as one unit when the releasing the brake. Thus, the brake pad arrangement will follow the spreader plate when the spreader plate is forced in a direction away from the brake disc. A technical benefit may include that, by forcing the brake pad arrangement away from the brake disc together with the spreader plate, the first surface of the brake pad arrangement will not be in contact with the brake disc after the braking event, whereby residual drag losses can be avoided. As a consequence, the inertia for the vehicle during propulsion is reduced and the energy consumption for the vehicle may in turn be reduced. In addition, removal of the brake pad arrangement from the spreader plate when e.g. the brake pad arrangement is worn out due to excessive wear is simplified by the engagement interface extending from the upper peripheral end. In particular, the brake pad arrangement can be pulled out in a radial direction from the spreader plate when there is a desire to change brake pad arrangement. Hence, the first aspect enables for an efficient maintenance event.

Optionally in some examples, including in at least one preferred example, the brake pad arrangement is slidably connectable to the spreader plate at the engagement interface section. A technical benefit may include that the brake pad arrangement can be easily connected to the spreader plate.

Optionally in some examples, including in at least one preferred example, the engagement interface section extends from the upper peripheral end to the lower peripheral end for each of the second surface and the first spreader plate surface. A technical benefit may include that a strength of the engagement interface section is improved by the extensive extension from the upper peripheral end to the lower peripheral end.

Optionally in some examples, including in at least one preferred example, the engagement interface section comprising an axially protruding portion forming part of one of the brake pad arrangement and the spreader plate, and a recess portion forming part of the other one of the brake pad arrangement and the spreader plate, the axially protruding portion being arranged in the recess portion from the upper peripheral end towards the lower peripheral end. A technical benefit may include that the protruding portion can be arranged in contact with a surface of the recess portion when the spreader plate and the brake pad arrangement is forced away from the brake disc.

Optionally in some examples, including in at least one preferred example, the axially protruding portion forms part of the brake pad arrangement and the recess portion forms part of the spreader plate.

Optionally in some examples, including in at least one preferred example, the axially protruding portion is a T-shaped portion extending axially from the second surface of the brake pad arrangement.

Optionally in some examples, including in at least one preferred example, the first interface surface is arranged on a surface of the T-shaped portion having a surface normal directed towards the second surface of the brake pad arrangement.

Optionally in some examples, including in at least one preferred example, the second interface surface is arranged in the recess portion of the spreader plate.

Optionally in some examples, including in at least one preferred example, the engagement interface section comprises a pair of first interface surfaces and a pair of second interface surfaces. A technical benefit may include that a uniform distribution of forces acting on the brake pad arrangement from the spreader plate upon moving the spreader plate away from the brake disc can be obtained. As a consequence, a further reduced risk of residual drag losses can be obtained.

Optionally in some examples, including in at least one preferred example, the interface surfaces of the pair of first interface surfaces are arranged on opposite lateral sides of a mid-portion of the brake pad arrangement.

Optionally in some examples, including in at least one preferred example, the first and second interface surfaces are arranged at an axial distance from each other during the brake mode. A technical benefit may be that the interface surfaces only connect to each other when releasing the brake. A geometric play is thus arranged between the interface surfaces which may simplify the removal of the brake pad arrangement during maintenance.

Optionally in some examples, including in at least one preferred example, the wheel brake arrangement further comprises an actuating piston connected to a second spreader plate surface of the spreader plate, the first and second spreader plate surfaces being arranged on opposite axial sides of the spreader plate.

Optionally in some examples, including in at least one preferred example, the actuating piston is configured to apply a force on the spreader plate in a direction towards the brake pad arrangement during the brake mode, and further configured to pull the spreader plate in a direction away from the brake pad arrangement during the brake release mode. A technical benefit may include that efficient braking and release of the brake can be obtained.

Optionally in some examples, including in at least one preferred example, the actuating piston connected to the second spreader plate surface is a single actuating piston.

Optionally in some examples, including in at least one preferred example, the brake pad arrangement is a first brake pad arrangement, wherein the wheel brake arrangement further comprises a second brake pad arrangement configured to suspend a second brake pad arranged to engage with the brake disc during the brake mode, the first and second brake pad arrangements being spaced axially from each other. A technical benefit may include that a brake disc is exposed to friction forces from two brake pad arrangements during a braking event.

Optionally in some examples, including in at least one preferred example, wherein the wheel brake arrangement further comprises the brake pad suspended by the first surface of the brake pad arrangement.

Optionally in some examples, including in at least one preferred example, wherein the wheel brake arrangement further comprises a brake disc.

According to a second aspect, there is provided a vehicle comprising the wheel brake arrangement according to any one of the examples described above in relation to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary illustration of a wheel brake arrangement according to an example,
Fig. 3 is an exemplary illustration of the brake pad arrangement, the spreader plate and the engagement interface section according to an example,
Fig. 4 is an exemplary exploded illustration of the brake pad arrangement, the spreader plate and the engagement interface section in Fig. 3 according to an example, and
Fig. 5 is an exemplary illustration of the brake pad arrangement, the spreader plate and the engagement interface section according to another example.

### DETAILED DESCRIPTION

The detailed description set forth below provides information and examples of the disclosed technology with sufficient detail to enable those skilled in the art to practice the disclosure.

The following disclosure seeks to solve the potential problem of drag forces affecting a wheel brake after the brake is released, also commonly referred to as drag losses. A technical benefit may be that the brake pad arrangement can be efficiently removed from the brake disc when the wheel brake is released which will minimize the risk of obtaining residual forces. As a consequence, the inertia for the vehicle during propulsion is reduced and the energy consumption for the vehicle may in turn be reduced.

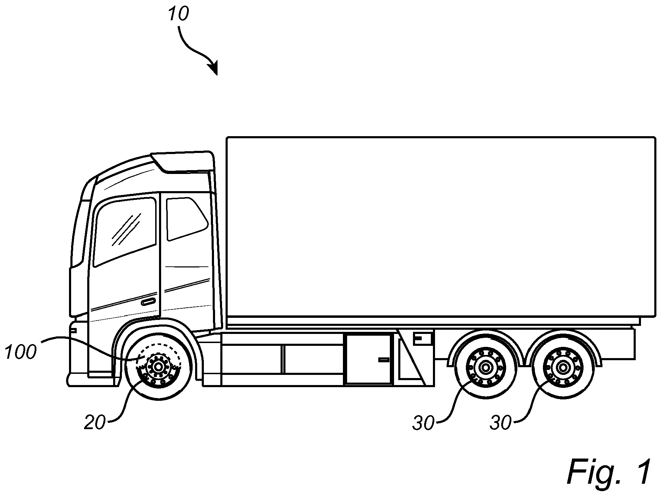

Turning to Fig. 1, which is an exemplary illustration of a vehicle 10 according to an example. The vehicle 10 comprises a non-illustrated traction motor, which may be an internal combustion engine or an electric traction motor, or a combination of internal combustion engine and electric traction motor. The vehicle 10 further comprises a wheel brake arrangement 100 which acts as a service brake for the vehicle. The wheel brake arrangement 100 is depicted as connected to the pair of front wheels 20 of the vehicle 10. However, it should be readily understood that the wheel brake arrangement 100 may alternatively, or additionally, be connected to any of the rear wheels 30 of the vehicle 10.

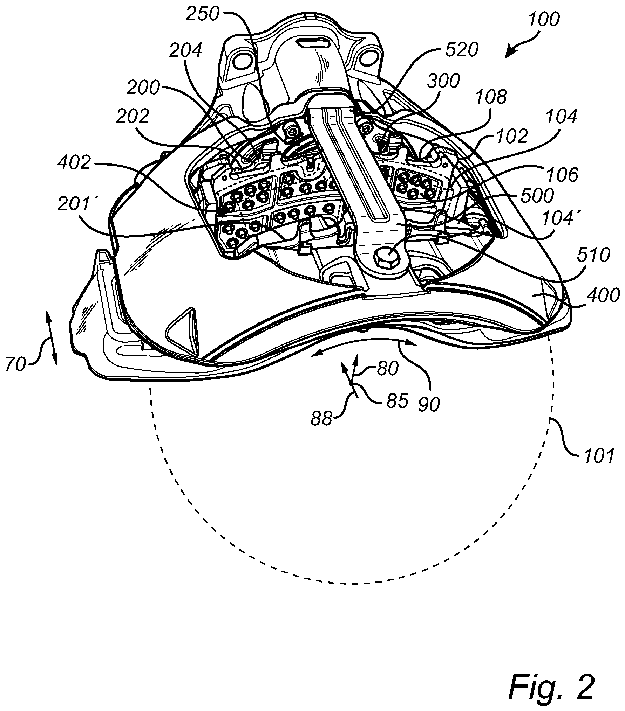

In order to describe the wheel brake arrangement 100 in further detail, reference is made to Fig. 2, which is an exemplary illustration of the wheel brake arrangement 100 according to an example. In yet further detail, Fig. 2 is a perspective view of portions of the wheel brake arrangement 100 where e.g. a brake disc 101 of the wheel brake arrangement 100 is depicted with dashed lines for illustrative purposes. Further, the wheel brake arrangement 100 depicted in Fig. 2 may additionally comprise pad retainer springs which are not included for illustrative purposes of the remaining parts of the wheel brake arrangement 100. Such pad retainer springs may be positioned radially outside the below described first and second brake pad arrangements for restricting radial displacement thereof.

The wheel brake arrangement 100 is defined in a cylindrical coordinate system, where an axial direction 70 corresponds to the direction of movements of the below described brake pad arrangement during a braking event. The radial direction 80 corresponds to a direction perpendicular to the axial direction 70, wherein the radial direction extends from a radial center 85 of the wheel brake arrangement 100. Hence, an axial geometric center axis 88 is arranged at the radial center 85. The circumferential direction 90 corresponds to a direction of rotation of the brake disc 101. The axial 70, radial 80 and circumferential 90 directions should thus be construed in relation to the rotating brake disc 101 of the wheel brake arrangement 100.

The exemplified wheel brake arrangement 100 comprises a brake pad arrangement 102 also referred to as the first brake pad arrangement. The first brake pad arrangement 102 is arranged to suspend a brake pad 104 illustrated with dashed lines, which brake pad 104 is configured to engage with the brake disc 101 during a braking event, i.e. when controlling the wheel brake arrangement 100 to reduce the speed of the vehicle 10. The brake pad 104 comprises a wear surface configured to engage with the brake disc 101 during the braking event. The brake pad 104 is thus exposed to wear and tear. In further detail, the first brake pad arrangement 102 comprises a first surface 106 suspending the brake pad 104, i.e. the brake pad 104 is connected or attached to the first surface 106 of the brake pad arrangement 102. The first brake pad arrangement 102 further comprises a second surface 108 arranged on an axially opposite side of the first surface 106.

The wheel brake arrangement 100 also comprises a spreader plate 200. The spreader plate 200 comprising a first spreader plate surface 202 arranged in abutment with the above described second surface 108 of the first brake pad arrangement 102. Further, the spreader plate 200 is configured to connect to an actuating piston 250 of the wheel brake arrangement. In further detail, the actuating piston 250 connects to a second spreader plate surface 204 of the spreader plate 200, where the second spreader plate surface 204 is arranged on an axially opposite side of the spreader plate 200 compared to the first spreader plate surface 202. In yet further detail, the first spreader plate surface 202 faces the second surface 108 of the first brake pad arrangement 102, while the second spreader plate surface 204 faces away from the second surface 108 of the first brake pad arrangement 102. When actuating the actuating piston 250 during a braking event, the actuating piston 250 pushes the spreader plate 200 in the axial direction 70 towards the brake disc 101. As such, the spreader plate 200 pushes the first brake pad arrangement 102 and the brake pad 104 in the axial direction towards the brake disc 101 whereby the brake pad 104 engages with the brake disc 101. By engaging the brake disc 101 should here be construed as the frictional abutment between the brake pad 104 and the brake disc 101 when the brake pad 104 rotationally slides against the surface of the brake disc. A level of engagement is dependent on the force of actuation of the actuating piston 250. The vehicle speed is thus reduced by the friction forces generated between the brake pad 104 and the brake disc 101 when actuating the actuating piston 250. The actuating piston 250 may be a single actuating piston which means that solely one actuating piston 250 applies a force to the second surface of the spreader plate 200 during the braking event.

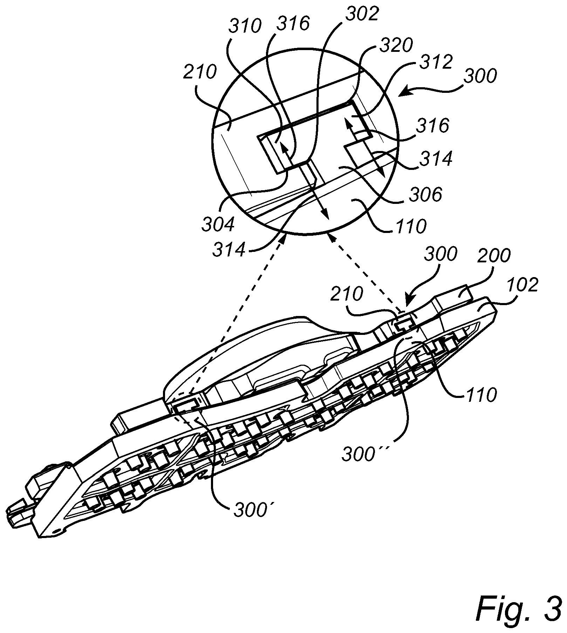

Further, the brake pad arrangement 100 comprises an engagement interface section 300, also in the following referred to as a first engagement interface section 300. The first engagement interface section 300 forms part of the first brake pad arrangement 102 as well as the spreader plate 200. Various examples of the engagement interface section 300 will be described in further detail below with reference to Figs. 3 - 4. However, in summary, the engagement interface section 300 may cause the first brake pad arrangement 102 to follow the motion of the spreader plate 200 as one unit when the brake is released, i.e. when the actuating piston forces the spreader plate 200 in the axial direction away from the brake disc. As such, the brake pad 104 will also follow the axial motion of the spreader plate 200 when the actuating piston forces the spreader plate 200 in the axial direction away from the brake disc.

Furthermore, the exemplified wheel brake arrangement 100 in Fig. 2 also comprises a second brake pad arrangement 102'. The second brake pad arrangement 102' is axially spaced apart from the first brake pad arrangement 102. In detail, the first brake pad arrangement 102 and the second brake pad arrangement 102' are arranged on axially opposite sides of the brake disc 101. The second brake pad arrangement 102' is connected to a second brake pad 104', which second brake pad 104' comprises a friction surface arranged to engage with the brake disc during the braking event. Thus, in the example depicted in Fig. 2, the wear surfaces of the brake pad 104 connected to the corresponding first brake pad arrangement 102 and the second brake pad 104' engages with the brake disc during the braking event.

Moreover, and as exemplified in Fig. 2, the wheel brake arrangement 100 comprises a caliper 400. The caliper 400 at least partly house the first brake pad arrangement 102, as well as the second brake pad arrangement 102'. The definition "caliper" should be understood to mean a structure of the wheel brake arrangement 100 that forms a housing for the components of the braking arrangement. Preferably, the caliper comprises an opening 402 at an upper portion for simplifying maintenance of e.g. the brake disc 101 and the first 102 and second 102' brake pad arrangements, etc.

Further, the wheel brake arrangement comprises a retainer bar 500. The retainer bar is arranged to extend across the opening 402 at an upper portion of the wheel brake arrangement 100. The retainer bar 500 preferably extends across, and radially above, the first 102 and second 102' brake pad arrangements, the non-illustrated pad retainer springs as well as the spreader plate 200. The retainer bar 500 may preferably be disconnectable from the caliper 400 by means of a fastening element 510 such as e.g. a screw connection in the vicinity of the second brake pad arrangement 102'. The retainer bar 500 may also be pivotably connected to the caliper at a second end 520 thereof, i.e. in the vicinity of the first brake pad arrangement 102. The retainer bar 500 is preferably arranged as a radial support for the pad retainer springs. In detail, a first pad retainer spring may be sandwiched between the retainer bar 500 and the first brake pad arrangement 102 and the spreader plate 200. A second pad retainer spring may be sandwiched between the retainer bar 500 and the caliper 400.

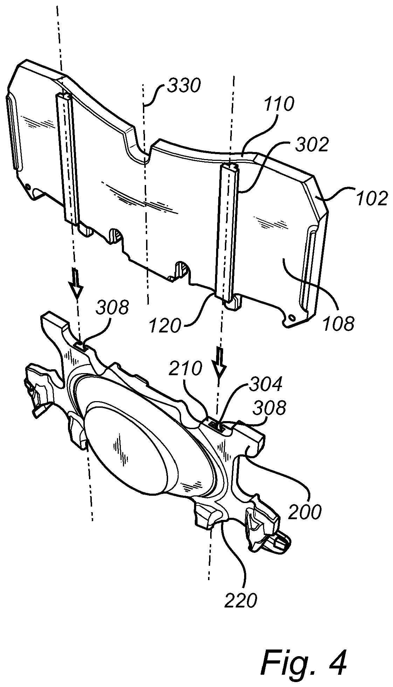

In order to describe the first engagement interface section 300 in further detail, reference is made to Figs. 3 - 4, where Fig. 3 is an exemplary illustration of the first brake pad arrangement 102, the spreader plate 200 and the engagement interface section 300 according to an example, and Fig. 4 is an exploded view thereof. In the exemplification of Figs. 3-4, the engagement interface section 300 extends in at least the radial direction from an upper peripheral end 110 of the first brake pad arrangement 102 as well as from an upper end 210 of the spreader plate 200. The exemplified engagement interface section 300 is elongated and extends towards a corresponding lower peripheral end 120, 220 of the first brake pad arrangement 102 and the spreader plate 200. As illustrated, the engagement interface section 300 may extend all the way down to the corresponding lower peripheral end 120, 220 of the first brake pad arrangement 102 and the spreader plate 200. The first brake pad arrangement 102 and the spreader plate 200 are thus slidably connectable to each other at the engagement interface section 300.

The engagement interface section 300 comprises a first interface surface 302 which forms part of the first brake pad arrangement 102. The engagement interface section 300 also comprises a second interface surface 304 that forms part of the spreader plate 200. During a brake release mode, i.e. when the actuating piston 250 forces the spreader plate 200 in the axial direction away from the brake disc, the first 302 and second 304 interface surfaces are arranged in abutment with each other and the spreader plate 200 thus forces the first brake pad arrangement 102 to follow the axial motion caused by the actuating piston 250. Hence, the engagement between the first 302 and second 304 interface surfaces prevents axial displacement between the first brake pad arrangement 102 and the spreader plate 200 during the brake release mode.

In the example depicted in Figs. 3 and 4, the engagement interface section 300 comprises an axially protruding portion 306. The axially protruding portion 306 forms part of the first brake pad arrangement 102 and protrudes axially from the second surface 108 of the first brake pad arrangement 102. The engagement interface section 300 further comprises a recess portion 308 forming part of the spreader plate 200. Both the protruding portion 306 as well as the recess portion 308 are elongated and extends from the corresponding upper peripheral ends 110, 210, where the protruding portion 306 is arranged in the recess portion 308. The exemplified protruding portion 306 is arranged as a T-shaped portion extending axially from the second surface 108 of the first brake pad arrangement 102. In particular, the T-shaped portion comprises a first leg 310 and a second leg 312, where the first 310 and second 312 legs protrudes in a transverse direction opposite to each other. The recess portion 308 is thus formed in a shape corresponding to the T-shape to slidably, in the radial direction, receive the T-shaped protrusion. The T-shaped protrusion may comprise a tapered shape such that a width of the first 310 and second 320 legs are larger at larger at the upper end 210 compared to the lower peripheral end 120, 220. In further detail, the width of the first 310 and second 320 legs may be continuously reduced from the upper end 210 in the direction towards the lower peripheral end. Hereby, an even further improved assembly and disassembly of the first brake pad arrangement 102 from the spreader plate may be obtained and a self-alignment achieved.

In the example depicted in Figs. 3 and 4, the first interface surface 302 is hence arranged on a surface of the T-shaped portion. The first interface surface 302 comprises a surface normal 314, i.e. a normal vector, directed towards the second surface 108 of the first brake pad arrangement 102. The second interface surface 304 is hereby arranged in the recess portion 308 of the spreader plate 200. The second interface surface 304 comprises a surface normal 316, i.e. a normal vector, directed away from the second surface 108 of the first brake pad arrangement 102.

Although a single engagement interface section 300 has been described above, it should be readily understood that other alternatives are conceivable. As depicted in Figs. 3 and 4, the engagement interface section 300 comprises a pair of engagement interface sections 300', 300". In particular, the engagement interface section 300 comprises a pair of first interface surfaces 302 and a pair of second interface surfaces 304. The engagement interface surfaces of the pair of engagement interface sections 300', 300" are arranged on opposite lateral sides of a mid-portion 330 of the first brake pad arrangement 102. As exemplified in Figs. 3 and 4, the first brake pad arrangement 102 and the spreader plate 200 may be symmetric in relation to the mid-portion 330. Hence, the engagement interface surfaces of the pair of engagement interface sections 300', 300" may be arranged at an equal distance from the mid-portion 330.

Furthermore, a cross-sectional area of the recess portion 308 may be larger than a cross-sectional area of the protruding 306 arranged in the recess portion 308. Hereby, a geometric play 320 may be provided between the protruding 306 and the recess portion 308. Hereby, during the brake mode when the actuating piston applies a force on the spreader plate, the first 302 and second 304 interface surfaces are arranged at an axial distance from each other. The geometric play 320 advantageously simplify removal and insertion of the first brake pad arrangement 102 from/to the spreader plate 200. The geometric play may also advantageously ensure that potential drag forces between the brake pad arrangement and the brake disc is not transferred to e.g. the spreader plate.

The description of Figs. 3 and 4 has been detailed to an engagement interface section where the protruding portion forms part of the first brake pad arrangement 102, and the recess portion forms part of the spreader plate. It should however be readily understood that the protruding portion may form part of the spreader plate, while the recess portion forms part of the first brake pad arrangement 102. In such a case, the protruding portion as well as the recess portion may take the form and design as described above and illustrated in Figs. 3 and 4, but arranged on opposite components.

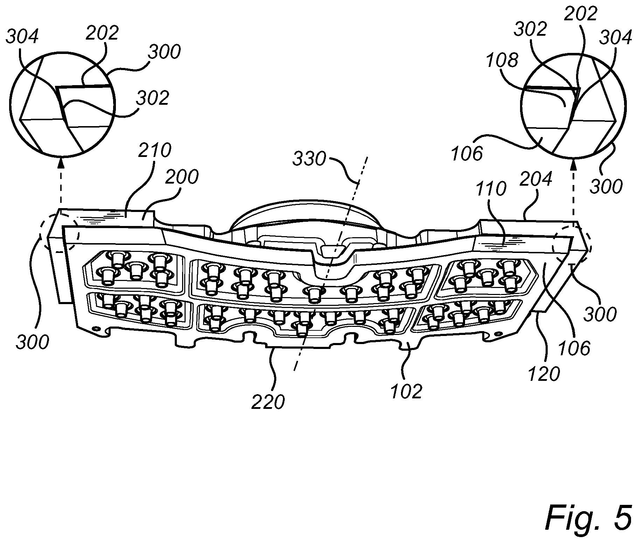

Reference is now made to Fig. 5 which is an exemplified illustration of the first brake pad arrangement 102, the spreader plate 200 and the engagement interface section 300 according to another example. The exemplified engagement interface section 300 extends from the upper portion 110 of the first brake pad arrangement 102 as well as from the upper portion 210 of the spreader plate 200. The exemplified engagement interface section 300 in Fig. 5 is elongated and extends towards the corresponding lower peripheral end 120, 220 of the first brake pad arrangement 102 and the spreader plate 200. As illustrated, the engagement interface section 300 may extend all the way down to the corresponding lower peripheral end 120, 220 of the first brake pad arrangement 102 and the spreader plate 200. The first brake pad arrangement 102 and the spreader plate 200 are thus slidably connectable to each other at the engagement interface section 300.

In a similar vein as the example described above in relation to Figs. 3 and 4, the engagement interface section 300 comprises a first interface surface 302 which forms part of the first brake pad arrangement 102. The engagement interface section 300 also comprises a second interface surface 304 that forms part of the spreader plate 200. During a brake release mode, i.e. when the actuating piston 250 (Fig. 2) forces the spreader plate 200 in the axial direction away from the brake disc, the first 302 and second 304 interface surfaces are arranged in abutment with each other and the spreader plate 200 thus forces the first brake pad arrangement 102 to follow the axial motion caused by the actuating piston 250. Hence, the engagement between the first 302 and second 304 interface surfaces prevents axial displacement between the first brake pad arrangement 102 and the spreader plate 200 during the brake release mode.

As can be seen in Fig. 5, the first interface surface 302 is arranged as a tapered surface, which extends from the first surface 106 to the second surface 108 of the first brake pad arrangement 102, as well extending in a direction from the mid-portion 330 along the extension from the first surface 106 to the second surface 108. In a similar vein, the second interface surface 304 is arranged as a tapered surface, which extends from the first spreader plate surface 202 in a direction towards the second spreader plate surface 204, as well as narrowing in the direction from the mid-portion 330 along the extension from the first spreader plate surface 202 towards the second spreader plate surface 204. The first 302 and second 304 interface surfaces may also be tapered in the direction from the upper portion 110 towards the lower portion 120 of the first brake pad arrangement 102. Hence, the distance from the mid-portion 330 to the first 302 and second 304 interface surfaces is reduced along the distance from the upper portion 110 towards the lower portion 120 of the first brake pad arrangement 102.

The above description has been given in relation to various examples of the engagement interface section 300 connecting the first brake pad arrangement 102 to the spreader plate 200. It should however be readily understood that the second brake pad arrangement 102' may be connected to the caliper 400 in a similar manner. Thus, the portions of the interface section 300 described above which forms part of the spreader plate 200 may form part of the caliper 400, while the portions of the interface section 300 forming part of the first brake pad arrangement 102 may form part of the second brake pad arrangement 102'.

### EXAMPLE LIST

Example 1. A wheel brake arrangement for a vehicle, the wheel brake arrangement comprising: a brake pad arrangement comprising a first surface configured to suspend a brake pad arranged to engage with a brake disc during a brake mode of the wheel brake arrangement, and a second surface arranged on an axially opposite side of the brake pad arrangement relative to the first surface, a spreader plate comprising a first spreader plate surface facing the second surface of the brake pad arrangement, and an engagement interface section forming part of the brake pad arrangement and the spreader plate, the engagement interface section extends from an upper peripheral end towards a lower peripheral end for each of the second surface and the first spreader plate surface, wherein the engagement interface section comprises a first interface surface forming part of the brake pad arrangement, and a second interface surface forming part of the spreader plate, the first and second interface surfaces being arranged in abutment with each other in at least an axial direction of the wheel brake arrangement during a brake release mode of the wheel brake arrangement to prevent axial displacement between the brake pad arrangement and the spreader plate.

Example 2. The wheel brake arrangement of example 1, wherein the brake pad arrangement is slidably connectable to the spreader plate at the engagement interface section.

Example 3. The wheel brake arrangement of any one of examples 1 or 2, wherein the engagement interface section extends from the upper peripheral end to the lower peripheral end for each of the second surface and the first spreader plate surface.

Example 4. The wheel brake arrangement of any one of the preceding examples, wherein the engagement interface section comprising an axially protruding portion forming part of one of the brake pad arrangement and the spreader plate, and a recess portion forming part of the other one of the brake pad arrangement and the spreader plate, the axially protruding portion being arranged in the recess portion from the upper peripheral end towards the lower peripheral end.

Example 5. The wheel brake arrangement of example 4, wherein the axially protruding portion forms part of the brake pad arrangement and the recess portion forms part of the spreader plate.

Example 6. The wheel brake arrangement of example 5, wherein the axially protruding portion is a T-shaped portion extending axially from the second surface of the brake pad arrangement.

Example 7. The wheel brake arrangement of example 6, wherein the first interface surface is arranged on a surface of the T-shaped portion having a surface normal directed towards the second surface of the brake pad arrangement.

Example 8. The wheel brake arrangement of any one of examples 5 - 7, wherein the second interface surface is arranged in the recess portion of the spreader plate.

Example 9. The wheel brake arrangement of any one of the preceding examples, wherein the engagement interface section comprises a pair of first interface surfaces and a pair of second interface surfaces.

Example 10. The wheel brake arrangement of example 9, wherein the interface surfaces of the pair of first interface surfaces are arranged on opposite lateral sides of a mid-portion of the brake pad arrangement.

Example 11. The wheel brake arrangement of any one of the preceding examples, wherein the first and second interface surfaces are arranged at an axial distance from each other during the brake mode.

Example 12. The wheel brake arrangement of any one of the preceding examples, wherein the wheel brake arrangement further comprises an actuating piston connected to a second spreader plate surface of the spreader plate, the first and second spreader plate surfaces being arranged on opposite axial sides of the spreader plate.

Example 13. The wheel brake arrangement of example 12, wherein the actuating piston is configured to apply a force on the spreader plate in a direction towards the brake pad arrangement during the brake mode, and further configured to pull the spreader plate in a direction away from the brake pad arrangement during the brake release mode.

Example 14. The wheel brake arrangement of any one of examples 12 or 13, wherein the actuating piston connected to the second spreader plate surface is a single actuating piston.

Example 15. The wheel brake arrangement of any one of the preceding examples, wherein the brake pad arrangement is a first brake pad arrangement, wherein the wheel brake arrangement further comprises a second brake pad arrangement configured to suspend a second brake pad arranged to engage with the brake disc during the brake mode, the first and second brake pad arrangements being spaced axially from each other.

Example 16. The wheel brake arrangement of any one of the preceding examples, further comprising the brake pad suspended by the first surface of the brake pad arrangement.

Example 17. The wheel brake arrangement of any one of the preceding examples, further comprising a brake disc.

Example 18. A vehicle comprising the wheel brake arrangement according to any one of the preceding examples.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A wheel brake arrangement for a vehicle, the wheel brake arrangement comprising:
- a brake pad arrangement comprising a first surface configured to suspend a brake pad arranged to engage with a brake disc during a brake mode of the wheel brake arrangement, and a second surface arranged on an axially opposite side of the brake pad arrangement relative to the first surface,
- a spreader plate comprising a first spreader plate surface facing the second surface of the brake pad arrangement, and
- an engagement interface section forming part of the brake pad arrangement and the spreader plate, the engagement interface section extends from an upper peripheral end towards a lower peripheral end for each of the second surface and the first spreader plate surface, wherein the engagement interface section comprises a first interface surface forming part of the brake pad arrangement, and a second interface surface forming part of the spreader plate, the first and second interface surfaces being arranged in abutment with each other in at least an axial direction of the wheel brake arrangement during a brake release mode of the wheel brake arrangement to prevent axial displacement between the brake pad arrangement and the spreader plate.

2. The wheel brake arrangement of claim 1, wherein the brake pad arrangement is slidably connectable to the spreader plate at the engagement interface section.

3. The wheel brake arrangement of any one of claims 1 or 2, wherein the engagement interface section extends from the upper peripheral end to the lower peripheral end for each of the second surface and the first spreader plate surface.

4. The wheel brake arrangement of any one of the preceding claims, wherein the engagement interface section comprising an axially protruding portion forming part of one of the brake pad arrangement and the spreader plate, and a recess portion forming part of the other one of the brake pad arrangement and the spreader plate, the axially protruding portion being arranged in the recess portion from the upper peripheral end towards the lower peripheral end.

5. The wheel brake arrangement of claim 4, wherein the axially protruding portion forms part of the brake pad arrangement and the recess portion forms part of the spreader plate.

6. The wheel brake arrangement of claim 5, wherein the axially protruding portion is a T-shaped portion extending axially from the second surface of the brake pad arrangement.

7. The wheel brake arrangement of claim 6, wherein the first interface surface is arranged on a surface of the T-shaped portion having a surface normal directed towards the second surface of the brake pad arrangement.

8. The wheel brake arrangement of any one of claims 5 - 7, wherein the second interface surface is arranged in the recess portion of the spreader plate.

9. The wheel brake arrangement of any one of the preceding claims, wherein the engagement interface section comprises a pair of first interface surfaces and a pair of second interface surfaces.

10. The wheel brake arrangement of claim 9, wherein the interface surfaces of the pair of first interface surfaces are arranged on opposite lateral sides of a mid-portion of the brake pad arrangement.

11. The wheel brake arrangement of any one of the preceding claims, wherein the first and second interface surfaces are arranged at an axial distance from each other during the brake mode.

12. The wheel brake arrangement of any one of the preceding claims, wherein the wheel brake arrangement further comprises an actuating piston connected to a second spreader plate surface of the spreader plate, the first and second spreader plate surfaces being arranged on opposite axial sides of the spreader plate.

13. The wheel brake arrangement of claim 12, wherein the actuating piston is configured to apply a force on the spreader plate in a direction towards the brake pad arrangement during the brake mode, and further configured to pull the spreader plate in a direction away from the brake pad arrangement during the brake release mode.

14. The wheel brake arrangement of any one of the preceding claims, wherein the brake pad arrangement is a first brake pad arrangement, wherein the wheel brake arrangement further comprises a second brake pad arrangement configured to suspend a second brake pad arranged to engage with the brake disc during the brake mode, the first and second brake pad arrangements being spaced axially from each other.

15. A vehicle comprising the wheel brake arrangement according to any one of the preceding claims.
